# FASCICULE DE BREVET EUROPEEN

(11) **EP 0 673 704 B1**
(45) Date de publication et mention de la délivrance du brevet: **30.07.1997**
(21) Numéro de dépôt: 95400642.5
(22) Date de dépôt: 23.03.1995
(51) Int. Cl.: B23K 9/28, B23K 9/32

(54) **Installation de soudage automatique**
Automatische Schweissanlage
Automatic welding installation

(30) Priorité: 24.03.1994 FR 9403435
(43) Date de publication de la demande: 27.09.1995
(73) Titulaire: SOCIETE NATIONALE D'ETUDE ET DE CONSTRUCTION DE MOTEURS D'AVIATION, "S.N.E.C.M.A.", F-75015 Paris (FR)
(72) Inventeur: Arantes,Antonio Cremildo, F-91700 Ste Genevieve des Bois (FR); Pierquin, François, F-91540 Mennecy (FR); Ruault, Pierre Michel Philippe, F-91700 Fleury Merogis (FR)

(56) Documents cités:
- EP-A- 0 515 069
- DE-C- 3 400 111
- FR-A- 2 587 930
- US-A- 4 883 939
- US-A- 4 917 619

## Description

L'invention se rapporte à une installation de soudage automatique selon le préambule de la revendication 1.

De telles installations autorisent des remplacements de torches de soudage sans intervention manuelle, c'est-à-dire uniquement par le bras du robot chargé du soudage et par lequel les torches sont portées, et trouvent tout leur sens dans des situations où la variété des pièces à souder impose de changer périodiquement de torche, mais elles peuvent aussi être utilisées si on éprouve le besoin de remplacer la torche de soudage par un autre outil.

La façon d'agir dans le passé consistait à visser les torches successivement au bras et à les dévisser manuellement, ce qui est assez long et occupe un membre du personnel. Il faut encore visser ou dévisser l'extrémité d'une gaine souple portée par le bras de robot et qui sert à guider le fil de matière d'apport, dont une réserve est embobinée sur le bras et fournie automatiquement selon les besoins, à un conduit de guidage du fil, appelé plus brièvement guide-fil, fixé à la torche et qui s'arrête près des buses de soufflage des gaz ou de l'électrode de création d'arc.

Cependant, une installation automatique de soudage selon le préambule de la revendication 1, où un bras de robot est apte à saisir différentes torches passées sur un râtelier en se raccordant à elles pour l'alimenter en électricité, en fluide ou en fil d'apport est décrite dans le brevet US-A-4 883 939. Mais elle n'est utilisable que pour des procédés de soudage MIG où le fil d'apport est fourni au centre du conduit de guidage d'un gaz soufflé sur le bain de fusion et sert lui-même d'électrode de formation de l'arc électrique. Ce procédé est facilement mis en oeuvre car le fil d'apport, avancé constamment, est fondu à un débit variable en fonction des conditions réelles du soudage mais qui le maintient à une distance des pièces à souder favorable à la création de l'arc. En d'autres termes, les phénomènes électriques et thermiques existants exercent un réglage automatique de la distance entre le fil et les pièces soudées, et l'arc.

Les conditions changent dans d'autres procédés de soudage tels que les procédés TIG ou au plasma, où l'arc est créé par une électrode distincte du fil et qui n'est pas consumée. Il faut alors maintenir l'électrode à une distance constante des pièces à souder, ce que le bras de robot ne peut pas faire car il parcourt une trajectoire invariable et qui ne correspond pas exactement à la forme des pièces si on soude successivement des pièces un peu différentes d'une même série ou si la trajectoire n'a pas été définie avec précision. Les machines et installations connues n'offrent pas de solution à ce problème de régler constamment la distance de l'électrode tout en guidant le fil à une position invariable de l'électrode à partir d'un guide-fil distinct de l'électrode et de la buse qui la porte.

L'invention résout précisément cette difficulté, bien qu'elle puisse aussi être appliquée à d'autres procédés où l'extrémité de la torche doive suivre une trajectoire un peu différente de celle du bras de robot.

Sous sa forme la plus générale, l'invention concerne une installation de soudage automatique selon la revendication 1.

Dans une telle installation il est possible de programmer l'ordinateur de commande du bras de robot pour aller chercher une torche à son emplacement de rangement -car sa position est connue- ou au contraire pour l'y déposer ; d'avancer le fil d'apport de matière dans le guide-fil de la torche qui a juste été choisie et montée sur le bras grâce à la continuité des parties fixe et mobile du guide-fil ; et sans craindre un mauvais placement de la torche sur le bras, grâce aux moyens d'emboîtement.

L'originalité de l'invention réside en ce que les torches comprennent un bec mobile et relié à une autre partie des torches, à laquelle appartient la face d'assemblage, par une liaison mécanique de régulation de distance, et le conduit de guidage du fil des torches est composé d'une partie fixée au bec et d'une partie fixée à l'autre partie des torches, les deux parties du conduit de guidage coulissant l'une dans l'autre. Ainsi, l'électrode ou plus généralement l'extrémité de l'outil est déplacée indépendamment de l'outil, et le fil reste guidé par le guide-fil sur toute sa longueur.

Le dispositif de régulation de distance peut être commandé à l'aide de la tension d'arc. Si la tension est excessive, la torche est reculée des pièces à souder, et vice-versa. Cet asservissement est connu en soi.

Ces caractéristiques et d'autres, ainsi que d'autres objets et particularités de l'invention, vont maintenant être décrits plus précisément à l'aide des figures suivantes qui décrivent une réalisation effective :
- la figure 1 est vue générale des éléments du système,
- la figure 2 illustre plus en détail la torche et son emplacement de rangement,
- les figures 3 et 4 illustrent le mode de guidage du fil,
- les figures 5, 6 et 7 illustrent un dispositif perfectionné d'avance du fil,
- les figures 8 et 9 illustrent en détail une réalisation du dispositif de régulation de distance de torche,
- et les figures 10 et 11 illustrent une torche particulière de conception améliorée.

L'élément actif de l'installation de soudage est un bras 1 de robot dirigé par un ordinateur 2 qui commande ses déplacements et l'état de son fonctionnement. Le bras 1 est composé de plusieurs tronçons articulés entre eux et mobiles pour lui attribuer l'agilité souhaitée. On se contente ici de représenter le tronçon distal 3 et celui qui le précède 4, le reste du bras étant symbolisé par une embase 17, car beaucoup de genres de bras de robot convenables existent maintenant. Les tronçons 3 et 4 sont articulés autour d'un axe 5 et leurs mouvements sont régis par un vérin 6 qui leur est articulé par ses deux extrémités. Le tronçon distal 3 porte une bobine 7 qui constitue une réserve de fil 8 de matière d'apport. L'extrémité libre du fil 8 est enfilée dans un guide-fil 9 courant le long du tronçon distal 3 et qui a la contitution d'une gaine tubulaire souple. Le guide-fil 9 est interrompu à l'emplacement d'un moteur 10 qui entraîne un galet 11 ou un moyen du même genre pour tirer le fil 8 en frottant sur lui. Le tronçon distal 3 est terminé par un embout 12 qui s'arrête à une face d'assemblage 13 plane dans laquelle l'extrémité du guide-fil 9 est introduite.

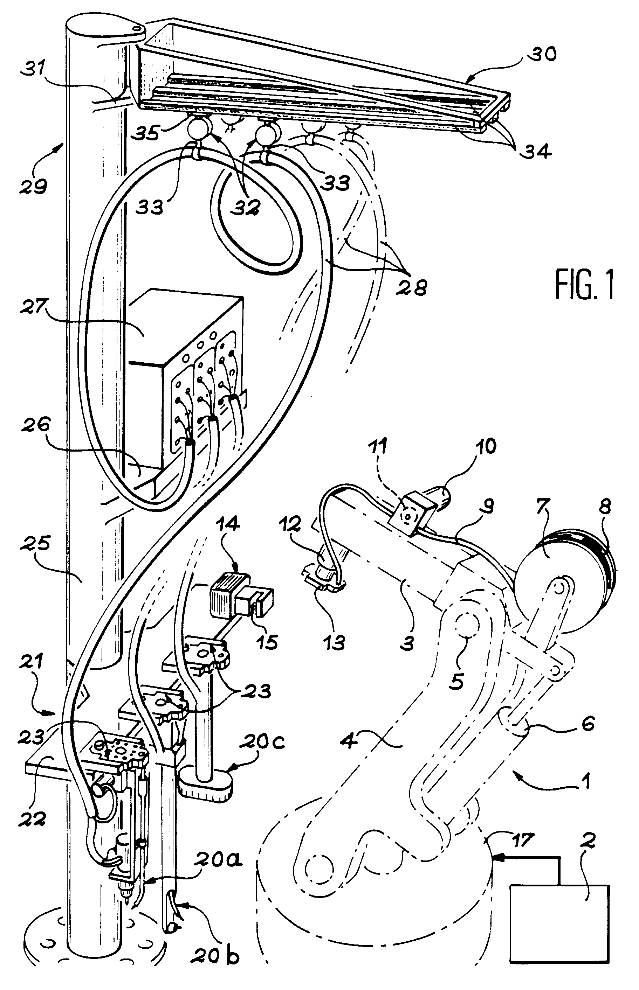

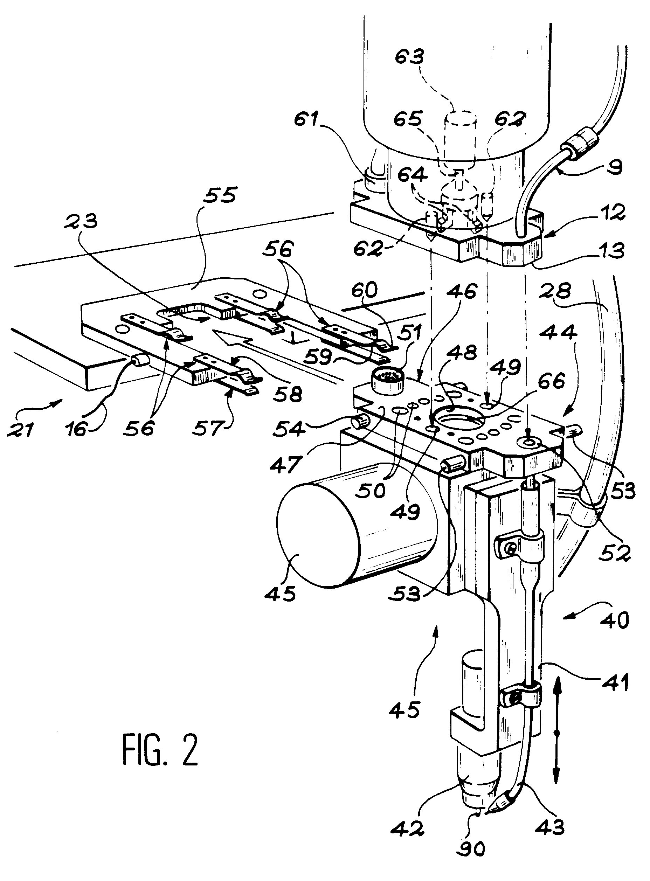

Des torches 20 qu'on va bientôt décrire sont mises en service après avoir été assujetties à la face d'assemblage 13. Ces torches 20 peuvent être de plusieurs types, et on en a représenté trois différentes, 20a, 20b et 20c sur la figure 1. Elles sont rangées sur un râtelier 21 composé essentiellement d'une tablette 22 sur un côté de laquelle s'ouvrent des compartiments de rangement 23. Un capteur de présence 16, visible à la figure 2, est associé à chaque compartiment de rangement 23. Il est relié à l'ordinateur 2 et lui indique si le compartiment est vide, pour recevoir une torche 20 délaissée. La tablette 22 porte encore une cisaille faisant office de coupe-fil 14. Cet engin est utilisé après un processus de soudage, au moins quand la torche doit être changée. Une boule de matière fondue puis solidifiée est en effet formée au bout du fil 8, et elle empêche de le retirer car elle risquerait d'être bloquée dans le guide-fil de torche qui sera bientôt décrit. On apporte donc la torche sur le coupe-fil 14, et le fil 8 est avancé dans la fente 15 de celui-ci, où se trouvent une cisaille et un détecteur photo-électrique qui ne sont pas représentés. Le détecteur repère la présence du fil 8 et commande à la cisaille de se refermer sur lui, ce qui coupe le bout du fil 8. Le bobinage du fil 8 peut alors être fait pour le retirer de la torche 20. On voit que ces opérations n'exposent à aucune complication, car il suffit de placer correctement la torche 20 ; or le coupe-fil 14 a une position connue.

La tablette 22 est fixée à un montant 25 porteur d'une autre tablette 26 sur laquelle on a posé une armoire de commande 27 destinée à la distribution sélective de gaz, d'eau et d'électricité aux torches 20, par l'intermédiaire de conduits souples 28 qui les relient à l'armoire de commande 27. On évite la dispersion désordonnée des conduits souples 28 grâce à une potence 29 formée au sommet du montant 25 et qui domine sur le reste de l'installation. La potence 29 est essentiellement composée d'une poutre 30 en porte-à-faux articulée au montant 25 autour d'un axe vertical 31 et qui porte des poulies 32 auxquelles les conduits souples 28 sont accrochés par des câbles à ressort 33 qui se détendent dès que les conduits souples 28 sont tirés et abaissés par le bras 1, quand il emporte les torches 20, mais qui remontent les conduits souples 28 à leur position de départ dès que les torches 20 sont libérées. De plus, la poutre 30 est munie de pistes 34 qui permettent à des traîneaux 35, auxquels sont suspendues les poulies 32, de coulisser le long de la poutre 30. D'autres câbles à ressorts ramènent les traîneaux 35 à l'origine de la poutre 30, contre le montant 25, si l'élasticité des conduits souples 32, qui sont généralement en caoutchouc, n'y suffit pas. Avec une telle suspension, il est facile de garder les câbles souples 28 à l'écart des autres éléments de l'installation et en particulier de les maintenir au-dessus et de côté du bras 1. Ils ne risquent donc pas de s'entremêler à d'autres éléments.

On passe maintenant au commentaire de la figure 2, où est illustrée une des torches 20. On y trouve en particulier : un bec 40 composé d'une armature 41 porteuse d'une buse 42 de projection de gaz (ou de logement d'une électrode 90 selon le procédé de soudage envisagé) et d'un guide-fil 43 latéral sur l'armature 41 et s'étendent à côté de la buse 42 ; une partie supérieure 44 à assembler au bras 1 ; et un régulateur de distance 45 qui relie la partie supérieure 44 au bec 40. Le régulateur de distance 45 est un engin qui permet d'avancer ou de reculer le bec 40 pour qu'il reste à la distance voulue de la pièce à souder quels que soient les mouvements imposés par la programmation au bras 1, qui peuvent ne pas être parallèles exactement au cordon de soudure. Ici, la partie supérieure 44 est formée avec une plaque d'assemblage 46 terminée par une face d'assemblage 47 plane qu'on accole à la face d'assemblage 13 de l'embout 12 du bras 1. On voit que le plaque d'assemblage 46 est percée et qu'affleurent à la face d'assemblage 47 un évidement 48 central, des perçages d'emboîtement 49 latéraux, des perçages de conduits d'alimentation 50 en deux rangées et, vers les extrémités de la plaque d'assemblage 46, une prise électrique 51 et une embouchure de guide-fil 52, raccordée au guide-fil 43. Enfin, deux paires de broches 53 et 54 pointent latéralement vers l'extérieur près des coins de la plaque d'assemblage 46. Les broches 53 et 54 sont destinées au rangement de la torche 20. Pour cela, la tablette 22 porte, à chacun des compartiments de rangement 23, une armature 55 qui porte quatre pinces 56. Chacune des pinces 56 est composée d'une lame inférieure 57, droite, élastique mais assez rigide, et d'une lame supérieure 58 élastique plus souple, dont la partie médiane est recourbée en bosse 59 vers le haut et dont l'extrémité libre 60 est elle aussi recourbée vers le haut. Deux des pinces 56 sont situées au bout de branches latérales de l'armature 55, à l'entrée du compartiment de rangement 23, et les deux autres sont situées sur une traverse de l'armature 55 reliant les branches, au fond du compartiment de rangement 23. Si on introduit la torche 20 dans le compartiment de rangement 23 avec l'exactitude nécessaire, les broches 53 pénètrent dans les pinces 56 d'entrée et les broches 54 dans celles du fond. Elles sont glissées entre les lames 57 et 58, repoussent les lames supérieures 58 en les faisant plier et sont maintenues sous les bosses 59. L'extraction de la torche 20 par un mouvement opposé est aussi accomplie sans difficulté.

Les perçages de conduits d'alimentation 50 sont destinés à la fourniture éventuelle de gaz ou de tout genre de fluide à la torche 20 à partir du bras 1. Quand les faces d'assemblage 13 et 47 sont accolées, ils viennent en prolongement de conduits semblables appartenant au bras 1. De même, la face d'extrémité 13 du bras 1 porte une prise électrique 61 qui se raccorde à la prise 51 et permet d'alimenter les torches 20 en électricité ; et le guide-fil 9 se raccorde au guide-fil 43. Le placement correct des faces d'assemblage 13 et 47 est assuré par une paire de pions 62 de la face d'assemblage 13 du bras 1, qui pénètrent dans les perçages d'emboîtement 49. Enfin, la face d'assemblage 13 du bras 1 est pourvue d'un vérin pneumatique de verrouillage 63 qui commande le déplacement de trois ergots 64, disposés à égale distance sur une circonférence avec une disposition rayonnante, au bout d'une tige 65 qui dépasse de la face d'assemblage 13 et pénètre dans l'évidement 48 central quand l'assemblage est réalisé. Les ergots pénètrent plus précisément dans une gorge 66 creusée dans la paroi intérieure de l'évidement 48 quand le fluide actif du vérin 63, qui s'étend à travers la tige 65, les fait se déployer, et ils en ressortent sous une action inverse. Le vérin 63 est ainsi commandé par l'ordinateur 2 pour verrouiller avec réversibilité la torche 20, ou plutôt l'une quelconque d'entre elles, au bras 1.

Il faut aussi remarquer que l'accouplement des prises 51 et 61 permet de fournir un signal d'identification de la torche 20 saisie à l'ordinateur 2, ce qui évite toute erreur, notamment si les torches 20 ont été interverties dans leurs compartiments de rangement 23. En effet, l'armoire de commande 27 délivre un signal particulier à chacune des torches 20 en permanence, et ce signal parvient à la prise électrique 51. Quand l'ordinateur 2 a identifié la touche 20 saisie par le bras 1, il agit sur l'armoire de commande 27 pour lui faire délivrer à la torche 20 les fluides nécessaires à son travail. Cette fonction d'identification est assurée par des moyens non représentés mais simples d'électronique.

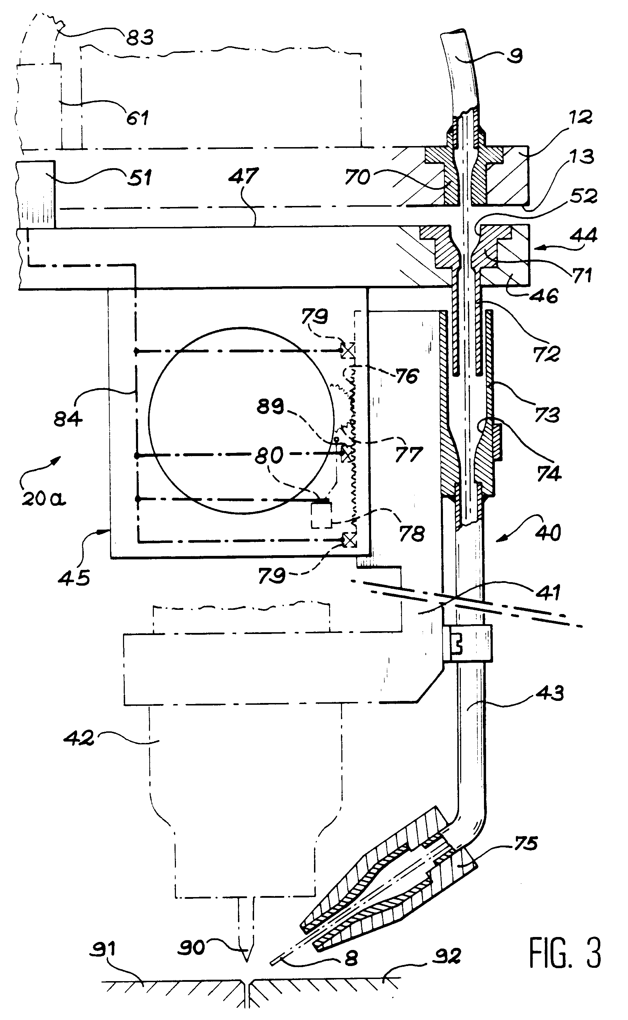

On passe maintenant à la figure 3. Le guide-fil 9 du bras 1 est terminé par un canon de guidage 70 qui s'étend à travers l'embout 12 jusqu'à la face d'assemblage 13 et se raccorde à l'embouchure de guide-fil 52 à l'assemblage de la torche 20. En s'enfonçant dans la plaque d'assemblage 46, l'embouchure de guide-fil 52 se rétrécit en une coupelle de guidage 71 terminée par un tube 72 qui a la faculté de coulisser dans un tube 73 de plus grand diamètre, terminé par un entonnoir 74, du guide-fil 43, solidaire comme on l'a vu du bec 40 et de l'armature 41 de la torche 20, alors que le tube 72 est solidaire de la partie supérieure 44 de la torche 20. Après le montage de la torche 20, le fil 8, constamment avancé en préliminaire au soudage et pendant celui-ci, est guidé par la coupelle de guidage 71 et l'entonnoir 74 et parvient toujours au bout du guide-fil 43, qui s'effile devant la buse 42 pour former une tuyère de guidage 75. L'électrode 90 est dirigée vers un joint mitoyen à deux pièces mécaniques 91 et 92 qu'il faut souder. On a représenté les éléments essentiels du régulateur de distance 45 : une crémaillère 76 solidaire de l'armature 41, un pignon 77 entraîné par un moteur électrique 78, ainsi que deux capteurs de fin de course 79 aux extrémités de la crémaillère 76, un capteur médian 89 à mi-distance des précédents à côté de la crémaillère 76 et un capteur de rotation 80 qui mesure les mouvements du pignon 77. Le moteur électrique 78 déplace verticalement la crémaillère 76, qui engrène avec le pignon 77, et ajuste donc la hauteur de la torche 20, de la buse 42 et de l'électrode 90 qui en dépasse sur la pièce à souder. L'armature 41 coulisse verticalement sous la partie supérieure 44 par une liaison mécanique non représentée qui peut prendre l'aspect de glissières ou de colonnes. Les capteurs 79, 80 et 89 sont reliés à l'ordinateur 2 par les prises 51 et 61, qui unissent des sections de lignes électriques 83 et 84 appartenant au bras 1 et à la torche 20 et permettent de parfaire cet ajustement de la torche 20 au lieu de se contenter d'une boucle d'asservissement purement autonome fondée sur l'ajustement de la tension d'arc sur une valeur fixe, définie à l'avance, selon laquelle l'ordinateur 2 mesure la tension d'arc entre l'électrode 90 et les pièces 91 et 92 et agit sur le moteur électrique 78 pour déplacer l'électrode 90.

Un procédé concret d'ajustement préliminaire au soudage de la hauteur de la torche 20 qui illustre l'intérêt des capteurs 79 et 89 est décrit ci-dessous. S'il est vrai qu'il suffit de placer le bec 40 à mi-course, puis d'approcher lentement la torche 20 des pièces à souder en mode manuel, on ne dispose pas de ces possibilités en mode de fonctionnement entièrement automatique. Quand un cycle de soudage commence, l'ordinateur 2 ignore le déploiement de la torche 20 saisie et doit chercher les butées, ce qu'il fait à grande vitesse. Les capteurs de fin de course 79 permettent de ne pas causer de dégâts en entrant violemment en butée mécanique et offrent une meilleure précision. La torche 20 est ensuite placée à mi-course et approchée des pièces à souder, sans précautions particulières car le capteur médian 89 offre une référence certaine qui assure que la torche 20 n'est pas avancée et que l'électrode 90 ne heurtera pas les pièces. L'étape suivante est un déplacement lent du bec 40 devant les pièces pour asservir la tension d'arc à une valeur admissible connue, conformément aux procédés antérieurs, mais il est possible ici, dès que cet ajustement est fait, de replacer le bec 40 à mi-course en déplaçant le bras de robot 1 sans bouger l'électrode 90. Quand la trajectoire de soudage est parcourue, on dispose ainsi d'une capacité de déplacement du bec 40 égale dans les deux sens, ce qui diminue les risques d'entrer en butée par suite d'imprécisions de la trajectoire ou dans les dimensions des pièces 91 et 92. Si toutefois cette situation est produite, les capteurs de fin de course 79 la détectent et arrêtent le bras de robot 1. Une alarme est alors donnée pour prévenir l'opérateur. Mais si le cycle de soudage est fini sans incident et sans arrêt de l'alimentation électrique qui aurait effacé le contenu des mémoires de l'ordinateur 1, il suffit de ramener le bec 40 à mi-course grâce, de nouveau, au capteur médian 89 pour que la torche puisse être approchée de pièces 91 et 92 suivantes de la même série. Le capteur médian 89 est nécessaire pour assurer un recalage précis, sans accumuler les imprécisions de mesure des déplacements du bec 40. La trajectoire du bras de robot 1 est, pour chacune des paires de pièces 91 et 92 de la série, identique à la trajectoire programmée, à une correction de translation près résultant du replacement susmentionné du bec 40 à mi-course juste avant le début d'un cycle de soudage.

D'autres avantages des capteurs 79 et 89 peuvent aussi apparaître dans certaines situations particulières en fonction de la programmation. Il est notamment possible d'imposer au bras 1 des modifications de son trajet programmé si on s'approche des fins de course admissibles, afin de remplacer le bec 40 plus au centre de sa course et de ne pas arrêter le soudage. Pendant tous ces déplacements, le mouvement de coulisse des tubes 72 et 73 l'un dans l'autre maintient un bon guidage du fil 8.

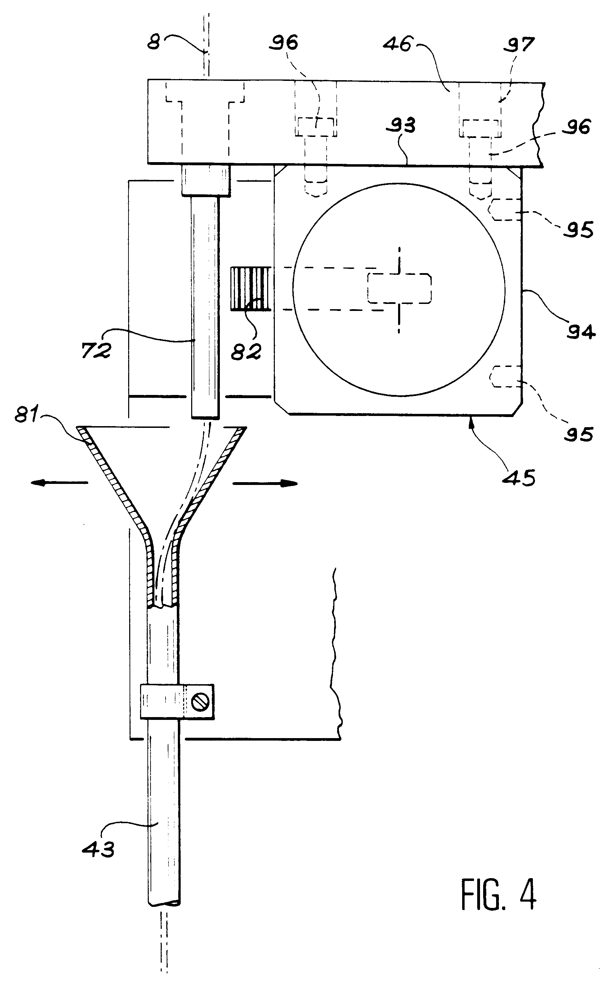

Cet aménagement de position était spécifique à la torche 20a de la figure 1, où la buse 42 est verticale et l'ajustement de la position de la torche consiste en un mouvement d'allongement ou de rétraction de celle-ci. Pour une torche telle que 20b (figure 4), où la buse 42 est orientée perpendiculairement à l'axe de la torche, le mouvement d'ajustement serait transversal. Le tube de guidage 73 serait alors remplacé par un entonnoir de guidage 81 qui serait en fait une extension de l'entonnoir 74. La crémaillère 76 verticale serait remplacée par une crémaillère 82 horizontale, et le reste du système ne serait pas modifié. On peut encore proposer d'autres systèmes pour assurer un guidage correct du fil 8, selon les possibilités de la torche 20.

Le régulateur de distance 45 peut être le même pour toutes les torches 20 si on peut le fixer aux plaques d'assemblages 46 par plusieurs faces au choix, telles que les faces orthogonales 93 et 94 sur la figure 4. Ces faces sont pourvues de groupes de taraudages 95 de dispositions identiques qui viennent en prolongement de perçages 97 traversant la plaque d'assemblage 46. Des vis 96 sont engagées dans les perçages 97 et les taraudages 95 pour assurer la fixation recherchée.

D'autres aspects moins importants mais encore intéressants de l'invention seront décrits avec les figures suivantes.

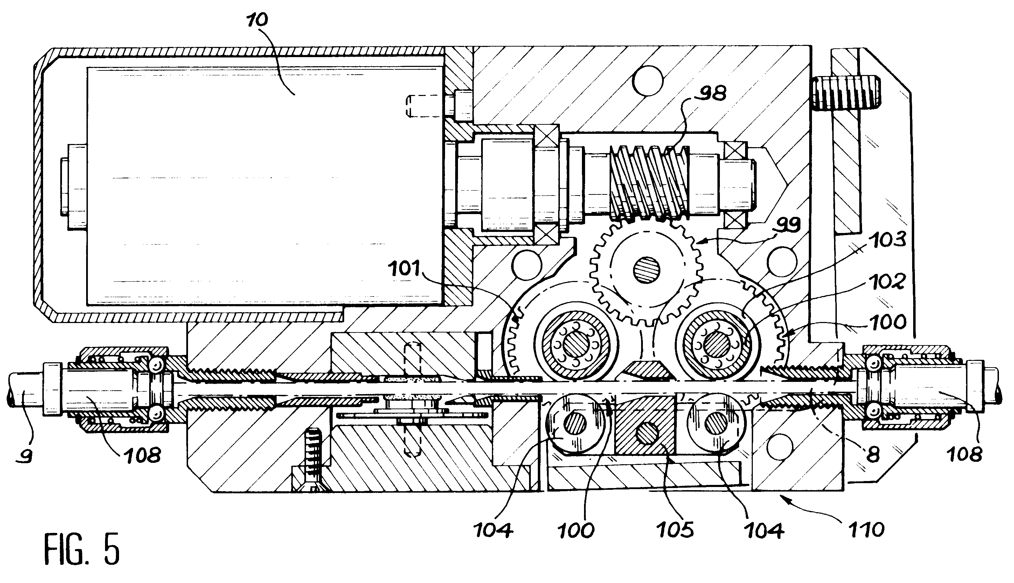

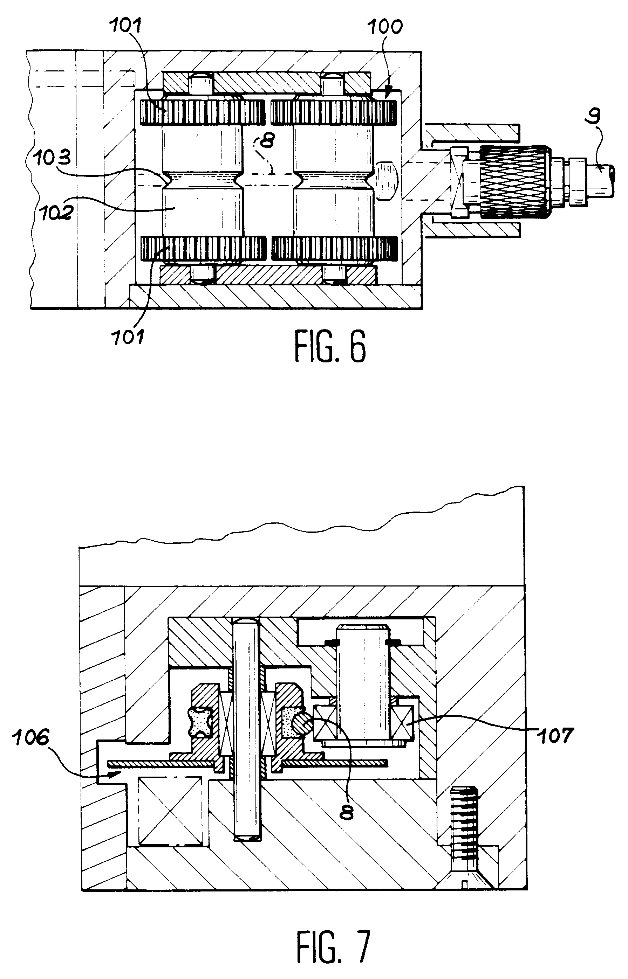

Un système perfectionné d'avance 110 du fil est illustré aux figures 5 à 7. On retrouve le moteur 10 de la figure 1, qui entraîne une vis sans fin 98 et, indirectement, un premier pignon 99 qui transmet lui-même son mouvement à deux roues dentées parallèles 100, dont les dents s'étendent aux extrémités et qui portent au centre, entre les secteurs dentés 101, une partie lisse 102 creusée d'une gorge 103 dans laquelle le fil 8 pénètre et qui permet de mieux l'entraîner. Des galets 104 fous s'étendent sous les roues 100, devant les gorges 103, et forcent le fil 8 à passer dans ces gorges. De plus, une filière 105 est disposée sous le pignon 99 : le fil 8 la traverse et est ainsi redressé entre les gorges 103 et les galets 104, pour supprimer les déformations de courbure qu'il aurait pu avoir acquis sur la bobine 7 et qui auraient gêné sa progression à cause des ondulations qu'il aurait faites dans le guide-fil 9 et des frottements conséquents sur ses parois.

Il convient aussi de s'assurer que ce système d'avance 110 ne patine pas et que le fil 8 est réellement entraîné, ce qui peut cesser s'il se tord dans le guide-fil 9 et se bloque. On dispose donc un codeur 106 dont une roue graduée est pressée contre le fil 8, maintenu droit grâce à un galet 107 opposé, près d'un des galets 104. Le fil 8 fait tourner la roue graduée en avançant, et l'ordinateur 2 donne l'alarme si le codeur 106 l'informe que le fil 8 est arrêté.

D'autres filières 108 sont disposées entre les galets 104, le codeur 106 et les bouts du guide-fil 9 pour continuer de guider convenablement le fil 8.

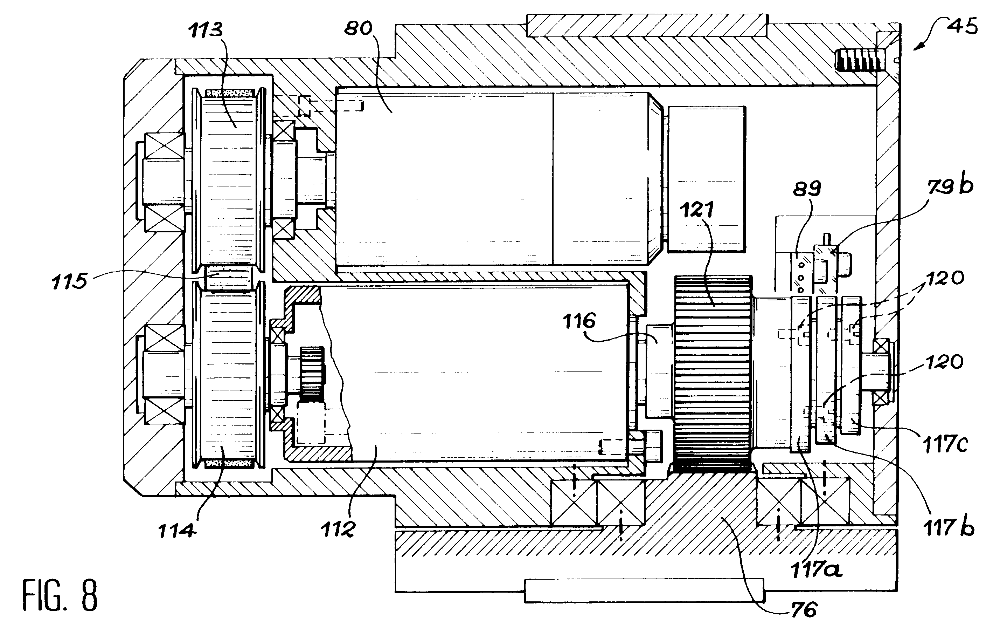

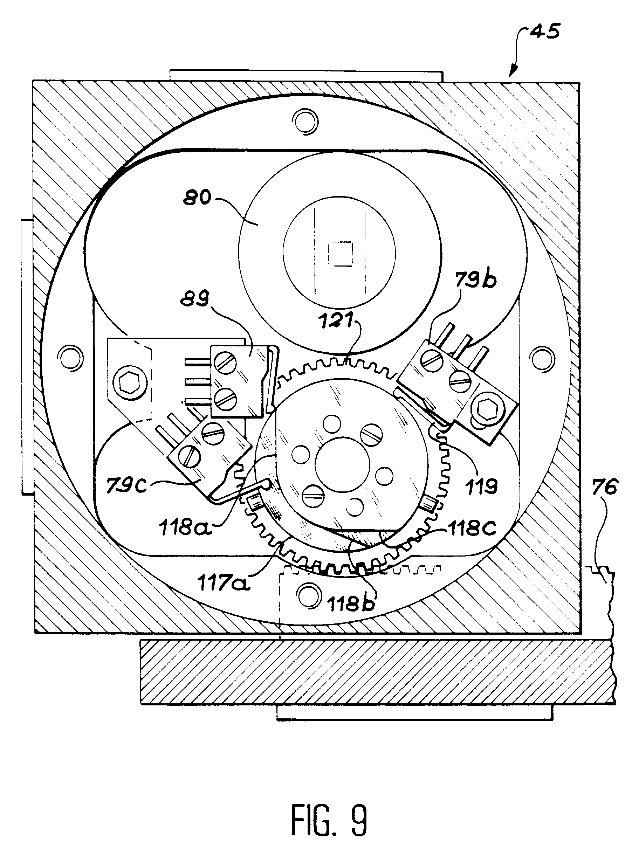

Un régulateur de distance perfectionné 111 est illustré aux figures 8 et 9. On retrouve certains éléments du régulateur 45 précédent ; ils figureront dans celui-ci avec les mêmes numéros de référence bien qu'il soient agencés différemment. Le moteur 80 est ici relié à un réducteur 112 par une paire de poulies 113 et 114 réunies par une courroie 115. Un arbre de sortie 116 du réducteur 112 porte trois cames circulaires 117a, 117b et 117c empilées. Chacune des cames 117 possède un secteur angulaire évidé 118a, 118b ou 118c et se trouve devant un des capteurs 79 et 89, devant lequel elle tourne, de sorte qu'une touche palpeuse 119 du capteur concerné est relâchée quand elle s'étend devant le secteur évidé 118 de la came 117, mais repoussée par la came 117 sinon.

Les secteurs évidés 118 définissent les références de la course du régulateur de distance 111. Dans la position de la figure 8, le capteur de mi-course 89 a sa touche 119 contre le bord du secteur évidé 118a de la came 117a. Une rotation de l'arbre de sortie 116 dans le sens horaire relâcherait la touche 119, ce qui signifie qu'on passe dans l'autre moitié de la course. Cette rotation peut être poursuivie jusqu'à ce que la touche 119 d'un des capteurs de fin de course 79 soit repoussée par le bord du secteur évidé 118c de la came 117c. Ce capteur est désigné ici par 79c. Une rotation en sens opposé est aussi permise ; la touche 119 de l'autre capteur de fin de course (désigné par 79b) finira alors par arriver au bord du secteur évidé 118b de la came 117 et être relâchée, indiquant la fin de course opposée. On remarquera que les fins de course sont marquées par des mouvements opposés des touches 119 des capteurs 79 (relâchement et poussée), et que le capteur de mi-course 89 indique toujours dans quelle moitié de course on se trouve, ce qui fournit des informations redondantes dues à des signaux différents qui rendent plus sûre la régulation de distance des torches 20.

Des vis 120 unissent les cames 117 entre elles et à un pignon 121 de l'arbre de sortie 116 qui est chargé d'entraîner la crémaillère. Les glissements angulaires et axiaux des cames 117 sont donc interdits.

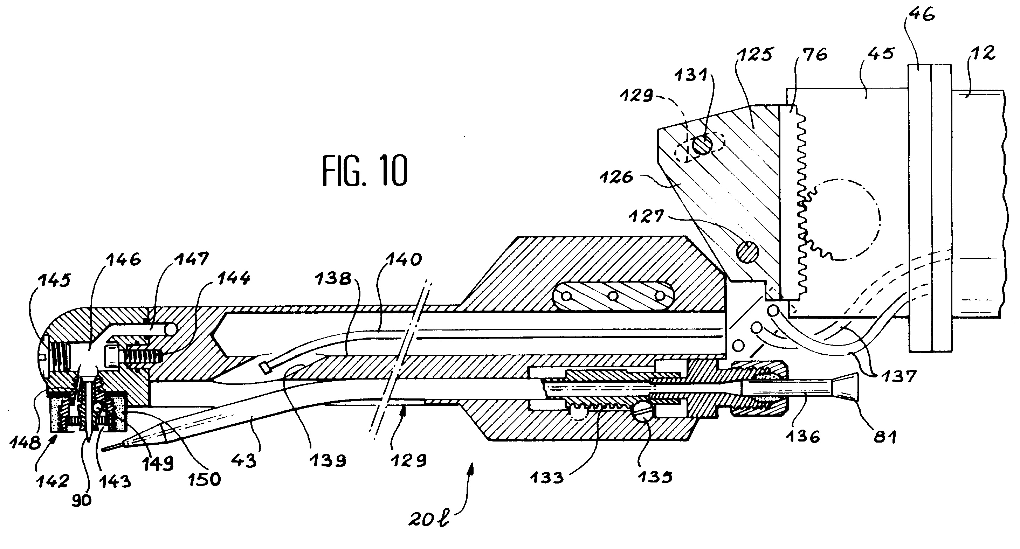

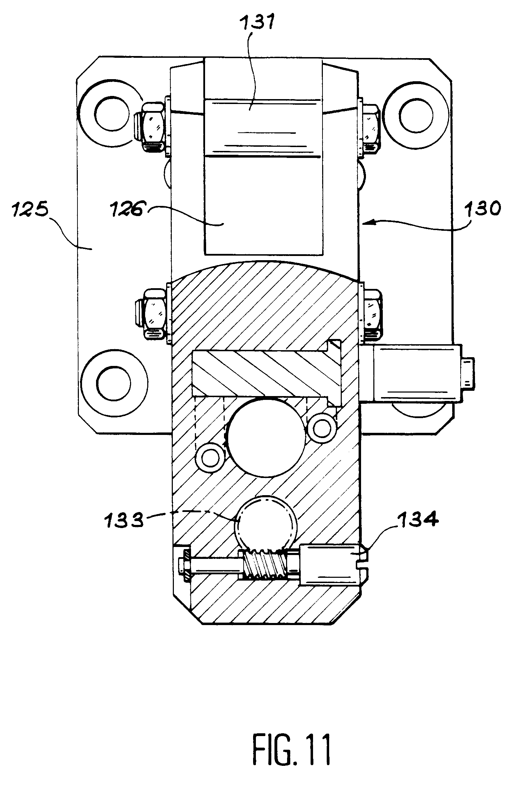

Enfin, la torche 20b est illustrée aux figures 10 et 11. Elle est remarquable avant tout par ses possibilités de réglage, qui permettent de l'employer à des tâches variées et parfois difficiles telles que le soudage dans des creux. Son bec comprend une bride 125 de vissage à la crémaillère 76 et de laquelle s'élève une nervure 126 qui reçoit un pivot 127 et une rainure en arc de cercle 128. La pièce principale de la torche 20b est cependant un fût 129 terminé à l'arrière par une fourche 130 articulée au pivot 127 et dont les branches sont unies par un boulon 131 qui passe dans la rainure 128. Quand le boulon est serré, la fourche 130 pince la nervure 126 et assure la conservation de l'orientation du fût 129.

Le fût 129 est aussi lisse que possible pour qu'on ne risque pas de l'accrocher si elle doit être enfoncée dans un creux de la pièce. Le guide-fil 43 est, pour cette raison, enfermé dans un perçage 132 du fût 129 sur la plus grande partie de sa longueur, sauf à l'extrémité, mais cette particularité permet de régler facilement sa longueur. On le munit d'une crémaillère 133 sur une brève portion dans un élargissement du perçage 132, et un axe 134 denté et à tête de vis, traversant le fût 129, engrène avec la crémaillère 133 et permet ainsi d'avancer ou de reculer le guide-fil 43 avec la seule aide d'un tournevis. Une vis 135, traversant également le fût 129 et un peu à l'arrière de l'axe 134, peut ensuite être tournée pour coincer le guide-fil 43.

Dans cette conception, le guide-fil 43 est raccordé à l'arrière par une section souple 136 qui peut se finir en l'entonnoir 81 de la figure 4. De façon semblable, des tuyaux souples 137 relient le fût 129 à la plaque d'assemblage 46 pour le transport des fluides et de l'électricité. Le fût 129 est creusé de perçages non représentés qui prolongent ces tuyaux souples jusqu'à l'électrode 90. De plus, un perçage 138 est prévu, qui est axial mais débouche sur l'extérieur, à l'avant, par un orifice en biais 139 dirigé vers le bout du guide-fil 43 et l'électrode 90. On peut y introduire un endoscope 140 qui surveille la bonne exécution du soudage.

La torche 20b est équipée d'une buse 142 démontable. Il est en effet utile de ne pas devoir refaire les réglages de la torche 20b s'il faut remplacer l'électrode 90 ou la grille 143 de diffusion des gaz, qui est encrassé rapidement. La buse 142 est donc unie au fût 129 par une vis interne 144, à laquelle on accède en retirant une vis courte 145, coaxiale et de plus grand diamètre, qui fait office de couvercle. La vis courte 145 laisse libre une chambre 146 située devant la vis interne 144 et qui occupe le centre de la buse 142. Y débouchent des perçages d'alimentation en gaz 147 prolongeant ceux du fût 129 et qui assurent donc le bon déroulement du soudage. La chambre 146 débouche sur l'extérieur par un groupe de perçages 148 disposés autour de l'électrode 90.

De façon encore plus favorable, on peut prévoir de retirer simplement l'électrode 90 et la grille 143 si une de ces pièces est hors d'usage, sans devoir ôter ni remplacer toute la buse 142. Une bille 149 repoussée par un ressort non représenté vers l'électrode 90 bloque alors celle-ci. On peut cependant l'extraire en la tirant, ce qui entraîne aussi la grille 143, qui est solidaire de l'électrode 90 mais pas de l'embouchure 150 du diffuseur. Un ensemble neuf d'électrode et de grille peut ensuite être mis en place par une simple poussée. Cette conception présente les avantages supplémentaires que les torches peuvent être rendues plus compactes que dans les solutions existantes où les électrodes sont retenues par des pinces ; et que les divers éléments du diffuseur peuvent être construits plus facilement en matières différentes, laiton ou acier inoxydable.

## Revendications

1. Installation de soudage automatique comprenant un bras de robot (1) muni d'un dispositif de commande (2) et d'une face d'assemblage (13) de torches de soudage (20) munies d'une face d'assemblage (47), et un râtelier (21) muni d'emplacements de rangement (23) pour les torches (20) en nombre quelconque, le bras (1) comprenant un magasin (7) de matière d'apport en fil (8), un dispositif d'avance (10, 11, 110) du fil, un conduit (9) de guidage du fil (8) fixé à la face d'assemblage (13) et un moyen de verrouillage automatique et réversible (63 à 65) de chacune des torches (20) sur le bras (1), les faces d'assemblage du bras et des torches comprenant des moyens d'emboîtement (49, 62) à une position d'assemblage unique pour laquelle, les faces d'assemblage étant accolées et le verrouillage étant accompli, le conduit de guidage du fil de la torche verrouillée vient en prolongement du conduit de guidage du fil du bras, caractérisée en ce que les torches comprennent un bec (40) mobile et relié à une autre partie (44) des torches (20), à laquelle appartient la face d'assemblage (47), par une liaison mécanique de régulation de distance (45), un conduit de guidage (43) du fil des torches qui est composé d'une partie (73) fixée au bec et d'une partie (72) fixée à l'autre partie (44) des torches, les deux parties (72, 73) du conduit de guidage coulissant l'une dans l'autre.

2. Installation du soudage automatique suivant la revendication 1, caractérisée en ce que les torches comprennent une buse (42) de logement d'une électrode portée par le bec concuremment au conduit de guidage de fil.

3. Installation de soudage automatique suivant l'une quelconque des revendications 1 ou 2, caractérisée en ce que les torches et le bras comprennent des conduits de fourniture de fluide (50) affleurant aux faces d'assemblage et se raccordant à la position d'assemblage.

4. Installation de soudage automatique suivant l'une quelconque des revendications 1 à 3, caractérisée en ce qu'elle comprend des conduits souples (28) d'alimentation des torches (20) à une altitude dominant sur les torches.

5. Installation de soudage automatique suivant la revendication 4, caractérisée en ce qu'elle comprend une potence composée d'une poutre (30) en porte-à-faux tournant autour d'un montant vertical (29) et le long de laquelle des suspensions élastiques (32, 33) des conduits souples (28) coulissent.

6. Installation de soudage automatique suivant l'une quelconque des revendications 1 à 5, caractérisée en ce que les moyens d'emboîtement comprennent deux broches (62) et deux perçages (49) et le moyen de verrouillage comprend un vérin de déploiement simultané d'ergots (64) dans une gorge (66) d'un évidement (48) creusé dans la face d'assemblage (47) des torches (20).

7. Installation de soudage automatique suivant l'une quelconque des revendications 1 à 6, caractérisée en ce que les torches (20) portent au moins une paire de broches (53 ou 54) pointant de deux côtés opposés et les emplacements de rangement (23) des râteliers (21) consistent en des alvéoles dotés de surfaces saillantes (57) de soutien des broches.

8. Installation de soudage automatique suivant la revendication 7, caractérisée en ce que des lames élastiques (58) munies d'une partie déformée (59) pour retenir les broches (53 ou 54) sont fixées sur les surfaces saillantes par une extrémité.

9. Installation de soudage automatique suivant l'une quelconque des revendications 1 à 8, caractérisée en ce que le râtelier (21) comprend un coupe-fil (14).

10. Installation de soudage automatique suivant l'une quelconque des revendications 1 à 9, caractérisée en ce que les torches comprennent des systèmes d'identification raccordés (51, 61) au dispositif de commande (2) quand les torches sont assemblées au bras.

11. Installation de soudage automatique suivant l'une quelconque des revendications 1 à 10, caractérisée en ce que le bras et les torches comprennent des lignes électriques (83, 84) qui affleurent aux faces d'assemblage (13, 47) et se raccordent à la position d'assemblage, reliant le dispositif de commande à la liaison mécanique de régulation de distance.

12. Installation de soudage automatique suivant l'une quelconque des revendications 1 à 11, caractérisée en ce que la partie (73) fixée au bec (40) du conduit de guidage de fil s'évase (74) devant le conduit (9) de guidage du fil du bras.

13. Installation de soudage automatique selon l'une quelconque des revendications 1 à 12, caractérisée en ce que la liaison mécanique de régulation de distance (45) comprend des indications de position (79, 89) de la liaison.

14. Installation de soudage automatique selon la revendication 13, caractérisée en ce que les indicateurs de position comprennent deux indicateurs de fin de course (79) et un indicateur de milieu de course (89) d'une partie mobile (76) de la liaison.

15. Installation de soudage automatique selon l'une quelconque des revendications 13 ou 14, caractérisée en ce que les indicateurs de position sont commandés par des cames (117) distinctes et solidaires.

16. Installation de soudage automatique selon les revendications 14 et 15, caracterisée en ce que l'indicateur de milieu de course (89) est commandé par une came ayant une forme conçue pour provoquer deux signaux différents de l'indicateur de milieu de course (89) sur deux moitiés de la course.

17. Installation de soudage automatique selon l'une quelconque des revendications 13 à 16, caractérisée en ce que les indicateurs de fin de course (79) sont conçus pour émettre des signaux différents aux fins de course qu'ils indiquent respectivement.

18. Installation de soudage automatique suivant l'une quelconque des revendications 1 à 17, caractérisée en ce que le dispositif d'avance du fil (110) comprend des moyens de redressement du fil.

19. Installation de soudage automatique selon la revendication 18, caractérisée en ce que les moyens de redressement du fil consistent en une paire de roues d'avance du fil (100), une paire de galets (104) situés respectivement devant les roues, le fil étant comprimé entre les roues et les galets, et en une filière (105) disposée entre les roues et entre les galets.

20. Installation de soudage automatique selon l'une quelconque des revendications 18 ou 19, caractérisée en ce que en ce que le dispositif d'avance de fil (110) comprend un capteur de déplacement (106) à roue (107) pressé contre le fil.

21. Installation de soudage automatique selon l'une quelconque des revendications 1 à 20, caractérisée en ce que certaines des torches (20b) comprennent un moyen (133, 134) de réglage de position d'avance du guide-fil (43).

22. Installation de soudage automatique selon l'une quelconque des revendications 1 à 21, caractérisée en ce que certaines des torches (20b) ont un bec réglable en orientation (125 à 131).

23. Installation de soudage automatique suivant l'une quelconque des revendications 1 à 22, caractérisée en ce que certaines des torches (20b) ont une buse amovible (142).

24. Installation de soudage automatique selon l'une quelconque des revendications 1 à 23, caractérisée en ce que certaines des torches comprennent une cavité (138) de passage d'un endoscope (140).

25. Installation de soudage automatique selon l'une quelconque des revendications 1 à 24, caractérisée en ce que certaines des torches (20b) sont construites avec une électrode (90) solidaire d'une grille (143) de diffusion et retenue sur la buse (142) par un système à bille de blocage (150).

## Claims

1. Automatic welding installation comprising a robot arm (1) equipped with a control device (2) and with an attachment face (13) for welding torches (20) which are equipped with an attachment face (47), and a rack (21) equipped with places (23) where the torches (20) may be stored, in any number, the arm (1) comprising a magazine (7) of filler in the form of wire (8), a device (10, 11, 110) for advancing the wire, a duct (9) for guiding the wire (8) which is fixed to the attachment face (13) and an automatic and reversible means (63 to 65) for locking each of the torches (20) onto the arm (1), the attachment faces of the arm and of the torches comprising means (49, 62) of interlocking at a unique attached position for which, with the attachment faces mating and locking being complete, the wire-guiding duct of the locked-on torch comes into line with the wire-guiding duct of the arm, characterized in that the torches comprise a tip (40) which is mobile and connected to another part (44) of the torches (20), to which part the attachment face (47) belongs, by a mechanical distance-adjusting link (45), a duct (43) for guiding the wire of the torches which is composed of a part (73) fixed to the tip and of a part (72) fixed to the other part (44) of the torches, the two parts (72, 73) of the guide duct sliding one inside the other.

2. Automatic welding installation according to Claim 1, characterized in that the torches comprise a nozzle (42) for housing an electrode borne by the tip and converging with the wire-guiding duct.

3. Automatic welding installation according to either one of Claims 1 and 2, characterized in that the torches and the arm comprise fluid-supply ducts (50) which lie flush with the attachment faces and become coupled in the attached position.

4. Automatic welding installation according to any one of Claims 1 to 3, characterized in that it comprises flexible ducts (28) for supplying the torches (20) at an altitude high above the torches.

5. Automatic welding installation according to Claim 4, characterized in that it comprises a bracket composed of a cantilever beam (30) rotating about a vertical post (29) and along which elastic hangers (32, 33) for the flexible ducts (28) slide.

6. Automatic welding installation according to any one of Claims 1 to 5, characterized in that the interlocking means comprise two pins (62) and two drillings (49) and the locking means comprises a ram which simultaneously deploys pawls (64) into a groove (66) of a cutout (48) made in the attachment face (47) of the torches (20).

7. Automatic welding installation according to any one of Claims 1 to 6, characterized in that the torches (20) carry at least one pair of pins (53 or 54) pointing out of two opposite sides and the storage places (23) in the racks (21) consist of cells provided with projecting surfaces (57) for supporting the pins.

8. Automatic welding installation according to Claim 7, characterized in that elastic blades (58) equipped with a deformed part (59) for holding the pins (53 or 54) are fixed to the projecting surfaces by one end.

9. Automatic welding installation according to any one of Claims 1 to 8, characterized in that the rack (21) comprises a wire cutter (14).

10. Automatic welding installation according to any one of Claims 1 to 9, characterized in that the torches comprise identification systems (51, 61) which are coupled to the control device (2) when the torches are attached to the arm.

11. Automatic welding installation according to any one of Claims 1 to 10, characterized in that the arm and the torches comprise electrical leads (83, 84) which are flush with the attachment faces (13, 47) and become coupled in the attached position, connecting the control device to the mechanical distance-adjusting link.

12. Automatic welding installation according to any one of Claims 1 to 11, characterized in that the part (73) fixed to the tip (40) of the wire-guiding duct flares (71) before the wire-guiding duct (9) of the arm.

13. Automatic welding installation according to any one of Claims 1 to 12, characterized in that the mechanical distance-setting link (45) comprises indications (79, 89) regarding the position of the link.

14. Automatic welding installation according to Claim 13, characterized in that the position indicators comprise two end-of-travel indicators (79) and one middle-of-travel indicator (89) for a mobile part (76) of the link.

15. Automatic welding installation according to either one of Claims 13 and 14, characterized in that the position indicators are controlled by distinct and joined-together cams (117).

16. Automatic welding installation according to Claims 14 and 15, characterized in that the middle-of-travel indicator (89) is controlled by a cam which has a shape designed to cause two different signals from the middle-of-travel indicator (89) on the two halves of its travel.

17. Automatic welding installation according to any one of Claims 13 to 16, characterized in that the end-of-travel indicators (79) are designed to emit different signals at the ends of travel which they respectively indicate.

18. Automatic welding installation according to any one of Claims 1 to 17, characterized in that the device (110) for advancing the wire comprises means for straightening out the wire.

19. Automatic welding installation according to Claim 18, characterized in that the means for straightening out the wire consist of a pair of wire-advancement wheels (100), a pair of rollers (104) situated respectively in front of the wheels, the wire being compressed between the wheels and the rollers, and of a die (105) arranged between the wheels and between the rollers.

20. Automatic welding installation according to either one of Claims 18 and 19, characterized in that the device (110) for advancing the wire comprises a displacement sensor (106) with a wheel (107) pressed against the wire.

21. Automatic welding installation according to any one of Claims 1 to 20, characterized in that some of the torches (20b) comprise a means (133, 134) for the advanced position fitting of the wire guide (43).

22. Automatic welding installation according to any one of Claims 1 to 21, characterized in that some of the torches (20b) have a tip (125 to 131) the orientation of which can be set.

23. Automatic welding installation according to any one of Claims 1 to 22, characterized in that some of the torches (20b) have a removable tip (142).

24. Automatic welding installation according to any one of Claims 1 to 23, characterized in that some of the torches comprise a cavity (138) for the passage of an endoscope (140).

25. Automatic welding installation according to any one of Claims 1 to 24, characterized in that some of the torches (20b) are constructed with an electrode (90) secured to a diffusion grating (143) and held on the nozzle (142) using a locking-ball system (150).

## Patentansprüche

1. Automatische Schweißanlage mit einem Roboterarm (1), der eine Steuervorrichtung (2) und eine Anschlußfläche (13) für Schweißbrenner (20) mit einer Anschlußfläche (47) aufweist, sowie mit einem Gestell (21), das Plätze (23) für die Schweißbrenner (20) in beliebiger Anzahl aufweist, wobei der Arm (1) einen Vorratsbehälter (7) für Schweißdraht (8), eine Vorschubvorrichtung (10, 11, 110) für den Draht, eine Führungsleitung (9) für den Draht (8), die an der Anschlußfläche (13) befestigt ist, und ein automatisches und entriegelbares Verriegelungsmittel (63 bis 65) für jeden der Schweißbrenner (20) zum Verriegeln an dem Arm (1) aufweist, wobei die Anschlußflächen des Arms und der Schweißbrenner Steckmittel (49, 62) zum Einstecken in eine einzige Anschlußstellung aufweisen, in der bei aneinandersitzenden Anschlußflächen und durchgeführter Verriegelung die Drahtführungsleitung des verriegelten Schweißbrenners in Verlängerung der Drahtführungsleitung des Arms zu liegen kommt,
dadurch gekennzeichnet,
daß die Schweißbrenner ein bewegliches Mundstück (40) aufweisen, das mit einem zweiten Abschnitt (44) der Schweißbrenner (20), zu dem die Anschlußfläche (47) gehört, durch eine mechanische Distanzregelverbindung (45) verbunden ist, sowie eine Führungsleitung (43) für den Schweißbrennerdraht aufweisen, die aus einem an dem Mundstück befestigten Teil (73) und einem an dem zweiten Abschnitt (44) der Schweißbrenner befestigten Teil (72) besteht, wobei die beiden Teile (72, 73) der Führungsleitung ineinander verschiebbar sind.

2. Automatische Schweißanlage nach Anspruch 1,
dadurch gekennzeichnet,
daß die Schweißbrenner eine Düse (42) zur Aufnahme einer Elektrode aufweisen, die zusammen mit der Drahtführungsleitung von dem Mundstück gehalten wird.

3. Automatische Schweißanlage nach einem der Ansprüche 1oder 2,
dadurch gekennzeichnet,
daß die Schweißbrenner und der Arm Fluid-Zuführungsleitungen (50) aufweisen, die mit den Anschlußflächen fluchten und in Anschlußstellung miteinander verbunden sind.

4. Automatische Schweißanlage nach einem der Ansprüche 1bis 3,
dadurch gekennzeichnet,
daß sie Versorgungsschläuche (28) für die Schweißbrenner (20) in einer über den Schweißbrennern liegenden Höhe aufweist.

5. Automatische Schweißanlage nach Anspruch 4,
dadurch gekennzeichnet,
daß sie ein Traggestell aufweist, das aus einem Ausleger (30) besteht, der um einen senkrechten Träger (29) schwenkbar ist und an dem entlang elastische Aufhängungen (32, 33) für die Schläuche (28) laufen.

6. Automatische Schweißanlage nach einem der Ansprüche 1bis 5,
dadurch gekennzeichnet,
daß die Steckmittel aus zwei Zapfen (62) und zwei Bohrungen (49) bestehen und das Verriegelungsmittel aus einem Zylinder zum gleichzeitigen Ausspreizen von Nasen (64) in eine Auskehlung (66) einer Aussparung (48), die in der Anschlußfläche (47) der Schweißbrenner (20) ausgeführt ist, besteht.

7. Automatische Schweißanlage nach einem der Ansprüche 1bis 6,
dadurch gekennzeichnet,
daß die Schweißbrenner (20) mindestens ein Paar Zapfen (53 oder 54) aufweisen, die in zwei entgegengesetzte Richtungen zeigen, und die Gestellplätze (23) der Gestelle (21) wabenförmig ausgeschnittene Teile mit hervorstehenden Flächen (57) zur Auflage der Zapfen sind.

8. Automatische Schweißanlage nach Anspruch 7,
dadurch gekennzeichnet,
daß federnde Zungen (58), die einen verformten Abschnitt (59) zum Festhalten der Zapfen (53 oder 54) aufweisen, mit einem Ende an den hervorstehenden Flächen befestigt sind.

9. Automatische Schweißanlage nach einem der Ansprüche 1bis 8,
dadurch gekennzeichnet,
daß das Gestell (21) einen Drahtabschneider (14) aufweist.

10. Automatische Schweißanlage nach einem der Ansprüche 1bis 9,
dadurch gekennzeichnet,
daß die Schweißbrenner Identifikationssysteme (51, 61) aufweisen, die mit der Steuervorrichtung (2) verbunden sind, wenn die Schweißbrenner an den Arm angeschlossen sind.

11. Automatische Schweißanlage nach einem der Ansprüche 1bis 10,
dadurch gekennzeichnet,
daß der Arm und die Schweißbrenner elektrische Leitungen (83,84) enthalten, die mit den Anschlußflächen (13, 47) fluchten und in Anschlußstellung aneinander anschließen, wobei sie die Steuervorrichtung mit der mechanischen Distanzregelverbindung verbinden.

12. Automatische Schweißanlage nach einem der Ansprüche 1bis 11,
dadurch gekennzeichnet,
daß der an dem Mundstück (40) befestigte Teil (73) der Drahtführungsleitung sich vor der Drahtführungsleitung (9) des Arms erweitert (71).

13. Automatische Schweißanlage nach einem der Ansprüche 1 bis 12,
dadurch gekennzeichnet,
daß die mechanische Distanzregelverbindung (45) Stellungsanzeigen (79, 89) der Verbindung aufweist.

14. Automatische Schweißanlage nach Anspruch 13,
dadurch gekennzeichnet,
daß die Stellungsanzeiger aus zwei Hubende-Anzeigern (79) und einem Hubmitte-Anzeiger (89) eines beweglichen Teils (76) der Verbindung bestehen.

15. Automatische Schweißanlage nach einem der Ansprüche 13 oder 14,
dadurch gekennzeichnet,
daß die Stellungsanzeiger durch einzelne und fest verbundene Nockenscheiben (117) gesteuert werden.

16. Automatische Schweißanlage nach den Ansprüchen 14 und 15,
dadurch gekennzeichnet,
daß der Hubmitte-Anzeiger (89) durch eine Nockenscheibe gesteuert wird, die dergestalt geformt ist, daß sie in zwei Hälften des Hubs zwei verschiedene Signale des Hubmitte-Anzeigers (89) bewirkt.

17. Automatische Schweißanlage nach einem der Ansprüche 13 bis 16,
dadurch gekennzeichnet,
daß die Hubende-Anzeiger (79) so geformt sind, daß sie bei den Hubenden, die sie jeweils anzeigen, verschiedene Signale abgeben.

18. Automatische Schweißanlage nach einem der Ansprüche 1bis 17,
dadurch gekennzeichnet,
daß die Drahtvorschubvorrichtung (110) Mittel zum Geraderichten des Drahts aufweist.

19. Automatische Schweißanlage nach Anspruch 18,
dadurch gekennzeichnet,
daß die Mittel zum Geraderichten des Drahts aus einem Paar Drahtvorschubrädern (100), aus einem Paar Rollen (104), die sich jeweils vor den Rädern befinden, wobei der Draht zwischen den Rädern und den Rollen zusammengedrückt wird, sowie aus einem Drahtleitstück (105), das zwischen den Rädern und zwischen den Rollen angeordnet ist, bestehen.

20. Automatische Schweißanlage nach einem der Ansprüche 18 oder 19,
dadurch gekennzeichnet,
daß die Drahtvorschubvorrichtung (110) einen Verschiebefühler (106) als Rad (107) aufweist, der gegen den Draht gedrückt ist.

21. Automatische Schweißanlage nach einem der Ansprüche 1bis 20,
dadurch gekennzeichnet,
daß bestimmte Schweißbrenner (20b) ein Mittel (133, 134) zur Einstellung der Vorschubposition der Führungsleitung (43) aufweisen.

22. Automatische Schweißanlage nach einem der Ansprüche 1bis 21,
dadurch gekennzeichnet,
daß bestimmte Schweißbrenner (20b) ein durch Drehen verstellbares Mundstück (125 bis 131) aufweisen.

23. Automatische Schweißanlage nach einem der Ansprüche 1bis 22,
dadurch gekennzeichnet,
daß bestimmte Schweißbrenner (20b) eine abnehmbare Düse (142) aufweisen.

24. Automatische Schweißanlage nach einem der Ansprüche 1bis 23,
dadurch gekennzeichnet,
daß bestimmte Schweißbrenner einen Hohlraum (138) für den Durchlaß eines Endoskops (140) aufweisen.

25. Automatische Schweißanlage nach einem der Ansprüche 1bis 24,
dadurch gekennzeichnet,
daß bestimmte Schweißbrenner (20b) mit einer Elektrode (90) konzipiert sind, die fest mit einem Diffusionsgitter (143) verbunden ist und an der Düse (142) durch ein Riegelkugel-System (150) festgehalten wird.
